# EUROPEAN PATENT APPLICATION

(11) **EP 4 745 434 A1**
(43) Date of publication of application: **20.05.2026**
(21) Application number: 24213639.8
(22) Date of filing: 18.11.2024
(51) Int. Cl.: F16H 61/08, F16H 61/16, F16H 61/30, F16H 59/68

(54) **MECHANICAL TRANSMISSION SYSTEM, ASSOCIATED POWERTRAIN AND ASSOCIATED VEHICLE**

(71) Applicant: VOLVO TRUCK CORPORATION, 405 08 Göteborg (SE)
(72) Inventor: Blanckenfiell, Magnus, 425 42 Göteborg (SE); Karpenman, Fredrik, 421 47 V Frölunda (SE)
(74) Representative: Lavoix

(57) **Abstract**

A mechanical transmission system (21) for a powertrain (7) of a vehicle (1), the mechanical transmission system comprising an automated gearbox (23) comprising different gears, the gears switched between different configurations, in each configuration a gear associated to the given configuration is configured to connect a primary part (11) of the powertrain to a secondary part (15) of the powertrain with a transmission coefficient associated, a pressurized air system (25) adapted to switch the gears from one configuration to another configuration and a controller (37) commanding the switching of the gears between the different configurations according to gear selection rules. The gear selection rules evolve between normal selection rules when a pressure of the pressurized air system is above a first threshold and safety selection rules when the pressure is below the first threshold, the safety selection rules imposing a waiting time between two successive switching of the gears.

## Description

### TECHNICAL FIELD

The disclosure relates generally to the enhancement of the safety of a mechanical transmission system. In particular aspects, the disclosure relates to mechanical transmission system of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

It is known to use pressurized air to switch an automated gearbox in different configuration and to brake the vehicle. Thus, a same system is used for the mechanical transmission and the braking. Nevertheless, when the vehicle lacks pressurized air, the driver could be in danger if (s)he needs to brake or use the transmission and there is not enough pressurized air. Thus, the vehicle has to be stopped when the level of pressurized air is not sufficient, thus being unavailable. The invention aims limiting the stopping or unavailability time of the vehicle due to a lack of pressurized air while ensuring the safety of the driver.

### SUMMARY

According to a first aspect of the disclosure, a mechanical transmission system for a powertrain of a vehicle, the mechanical transmission system comprising :
- an automated gearbox comprising different gears, the gears being configured to be switched between different configurations, in each configuration a gear associated to the given configuration is configured to connect a primary part of the powertrain to a secondary part of the powertrain with a transmission coefficient associated;
- a pressurized air system adapted to switch the gears from one configuration to another configuration; and
- a controller configured to command the switching of the gears between the different configurations according to gear selection rules, the gear selection rules evolving between normal selection rules when a pressure of the pressurized air system is above a first threshold, and safety selection rules when the pressure of the pressurized air system is below the first threshold, the safety selection rules imposing a waiting time between two successive switching of the gears.

The first aspect of the disclosure may seek to use the vehicle with a lower pressure while ensuring the safety of the driver by adapting the selection rules of the gearbox. A technical benefit may include limiting the time needed to wait before using the vehicle safely.

Optionally in some examples, including in at least one preferred example, the first threshold is comprised between 6 bar and 8 bar and preferably is equal to 7 bar. A technical benefit may include improving the selection of the rules.

Optionally in some examples, including in at least one preferred example, the gear selection rules also evolve to emergency selection rules, when the pressure of the pressurized air system is below a second threshold inferior to the first threshold, the emergency selection rules blocking the gears in a free configuration in which the secondary part is disconnected from the primary part. The second threshold is comprised between 4 bar and 6 bar and preferably is equal to 5.5 bar. A technical benefit may include improving the safety of the driver when the pressure is too low.

Optionally in some examples, including in at least one preferred example, the waiting time is comprised between a lower limit and an upper limit, and the lower limit being 2 seconds or less and the upper limit being 15 seconds or more and preferably the waiting time is equal to 5 seconds. The waiting time depends on the pressure of the pressurized air system, the waiting time being shorter when the pressure of the pressurized air system is near to the first threshold. A technical benefit may include improving the performance of the gearbox in relation with the pressure.

Optionally in some examples, including in at least one preferred example, each configuration of the gears is available for a speed range and/or an acceleration range of the vehicle, the safety selection rules limiting the number of switching by imposing the use of configurations which have distinct speed range and/or an acceleration range. A technical benefit may include limiting the use of the pressurized air by the mechanical transmission system.

Optionally in some examples, including in at least one preferred example, the safety selection rules impose a maximum switching time when the gears are switched from a configuration to another, the maximum switching time corresponding to the maximum time during which pressurized air is provided to the gearbox to switch the configuration of the gears. The maximum switching time is inferior to 2 seconds and preferably inferior to 1.5 seconds. The maximum switching time depends on the pressure of the pressurized air system, the maximum switching time being higher when the pressure of the pressurized air system is near to the first threshold. A technical benefit may include limiting the use of the pressurized air by the mechanical transmission system.

According to a second aspect of the disclosure, a powertrain of a vehicle comprising a mechanical transmission system as defined above and a braking system connected and activated by the pressurized air system and, when installed in a vehicle, is configured to brake the vehicle. The second aspect of the disclosure may seek to use the vehicle with a lower pressure while ensuring the safety of the driver by adapting the selection rules of the gearbox. A technical benefit may include limiting the time needed to wait before using the vehicle safely.

Optionally in some examples, including in at least one preferred example, wherein the safety selection rules imposes switching of the gears to run an engine of the powertrain at high speed. A technical benefit may include increasing the efficiency of a compressor of the mechanical transmission configured to supply pressurized air in order to increase the pressure of the pressurized air system.

According to a third aspect of the disclosure, A vehicle comprising a powertrain as defined above. The third aspect of the disclosure may seek to use the vehicle with a lower pressure while ensuring the safety of the driver by adapting the selection rules of the gearbox. A technical benefit may include limiting the time needed to wait before using the vehicle safely.

The disclosed aspects, examples, and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG.** 1 is a schematic view of a vehicle according to an embodiment of the invention.
**FIG.** 2 is an example of a curve A of a pressure of the air in a first tank as a function of time, a curve B of a pressure of the air in a second tank as a function of time, and a curve C of a pressure of the air available for a mechanical transition system as a function of time.

### DETAILED DESCRIPTION

The detailed description set forth below provides information and examples of the disclosed technology with sufficient detail to enable those skilled in the art to practice the disclosure.

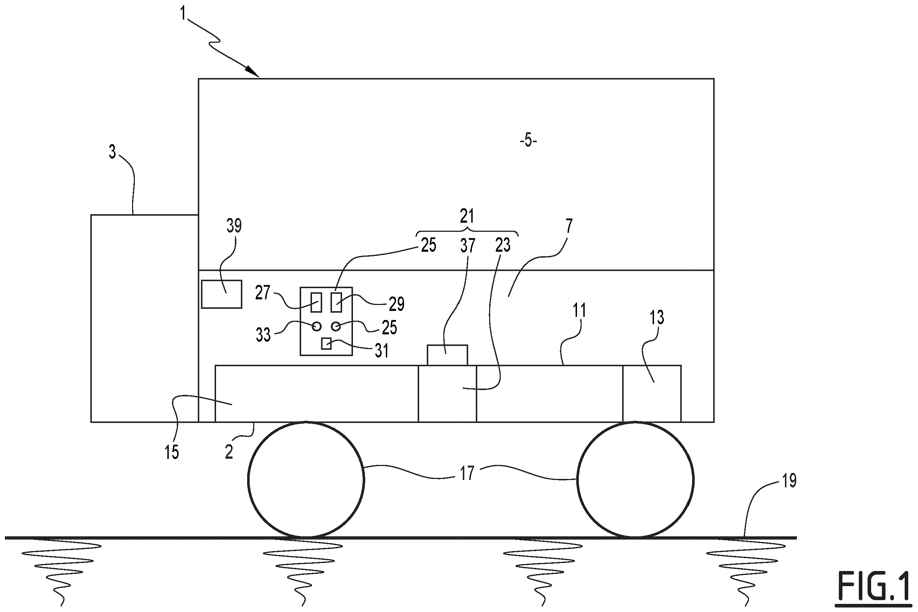

Figure 1 depicts a vehicle 1, comprising a frame 2, a driving cabin 3, a load compartment 5 and a powertrain 7, according to an embodiment of the invention.

The driving cabin 3 is supported by the frame 2 and positioned at the front of the vehicle 1. The vehicle 1 is drivable by a driver. The driver inside the driving cabin 3 controls the vehicle 1.

The powertrain 7 comprises a primary part 11. The primary part 11 comprises an internal combustion engine 13. The internal combustion engine 13 comprises an output shaft, not disclosed in the figures.

The powertrain 7 comprises a secondary part 15. The secondary part 15 comprises wheels 17. The wheels 17 are mounted on the frame 2 and configured to rotate to move the vehicle 1 on a road 19.

The powertrain 7 comprises a mechanical transmission system 21, configured to link the primary part 11 to the secondary part 15. The mechanical transmission system 21 comprises an automated gearbox 23. The gearbox 23 comprises gears, not represented, configured to be switched between different configurations. Each configuration of the gears is associated with a transmission coefficient. More precisely, an input of the gearbox 23 is driven by the internal combustion engine 13 of the primary part 11, and the secondary part 15 is driven by an output of the gearbox 23 for driving the wheels 17. Overall, the internal combustion engine 13 drives the wheels 17 through the gearbox 23 with a transmission coefficient depending on the gears configuration. An acceleration and/or a speed of the vehicle depend on the respective transmission coefficient. More precisely, each transmission coefficient is compatible with a speed range and/or an acceleration range. Thus, for a given transmission coefficient, if the driver desired a speed and/or an acceleration of the vehicle 1 not comprised in the speed range and/or an acceleration range associated to the given transmission coefficient, the transmission coefficient and by extension the gears configuration has to be modified to match with the speed and/or the acceleration desired by the driver.

The mechanical transmission system 21 comprises a pressurized air system 25. The pressurized air system 25 comprises a first tank 27 and a second tank 29, the first tank 27 and the second tank 29 are filled by pressurized air provided by a compressor 31 of the pressurized air system 25. The efficiency of the compressor 31 depends on a rotation speed of the internal combustion engine 13 The first tank 27 and the second tank 29 provide pressurized air to the gearbox 23 to switch the gears from one configuration to another configuration. The pressurized air system 25 comprises a first sensor 33 configured to measure the pressure in the first tank 27 and a second sensor 35 configured to measure the pressure in the second tank 29.

The mechanical transmission system 21 comprises a controller 37 configured to command the gearbox 23. More precisely, the controller 37 controls the switching of the gears between the different configurations according to gear selection rules in order to adapt the coefficient transmission to the speed and the acceleration of the vehicle 1.

Advantageously, the powertrain 7 comprises a braking system 39 configured to brake the vehicle. The braking system 39 is connected to the pressurized air system 25, the pressurized air system 25 providing pressurized air to the braking system 39 to activate brakes, not represented. Thus, the pressurized air of the air system 25 is both used for the mechanical transmission system 21 and the braking system 39.

The controller 37 receives the pressures of the first tank 27 and the second tank 29 from the sensors 33 and 35 and controls the providing in pressurized air of the gearbox 23 to switch the gears according to the gear selection rules.

The gear selection rules comprise a normal selection rules and a safety selection rules. The controller 37 commands the gearbox 23 according to the normal selection rules when the pressure of the pressurized air in the air system 25 is above a first threshold T1, the pressure of the pressurized air system 25 being a function of the pressures of the first tank 27 and the second tank 29. For instance, the pressure of the pressurized air system 25 is the addition of the pressures of the first tank 27 and the second tank 29. Advantageously, the first threshold T1 is comprised between 6 bar and 8 bar and preferably equal to 7 bar.

The controller 37 commands the gearbox 23 according to the safety selection rules when the pressure of the pressurized air in the air system 25 is below the first threshold T1. Thus, the gear selection rules evolve between normal selection rules and safety selection rules depending on the pressure of the pressurized air in the pressurized air system 25.

The safety selection rules impose a waiting time between two successive switching of the gears. In other words, when the air pressure is below the first threshold T1, the gears stay in the same configuration during at least the waiting time. The acceleration and the speed of the vehicle 1 depending on the transmission coefficient, when the air pressure is below the first threshold T1 the acceleration and the speed is limited during at least the waiting time. Thus, the controller 37 limits the use of the pressurized air for the mechanical transmission system 21 so that the pressurized air is kept in reserve and to not loose air supply to the transmission as a safety reserve. Another advantage of the invention is to keep the pressurized air in reserve for the braking system 39.

Advantageously, the waiting time is comprised between a lower limit and an upper limit. The lower limit is 5 seconds or less or 2 seconds or less and the upper limit is 10s or more or 15 seconds or more. Preferably, the waiting time is equal to 5 seconds. Advantageously, the waiting time depends on the pressure of the pressurized air, the waiting time being shorter when the pressure of the pressurized air system 25 is near to the first threshold T1. In other words, the closer the pressure of the pressurized air is to the first threshold T1, the shorter is the waiting time.

Advantageously, the safety selection rules limit the number of switching by imposing the use of configurations, which have not superposed speed range and/or an acceleration range. In other terms, the configuration authorized by the safety selection rules have distinct speed range and/or an acceleration range. More precisely, the controller 37, before commanding the switching of the gears, checks that the speed and/or the acceleration of the vehicle 1 is the maximal, respectively the minimal, speed and/or acceleration of the ranges associated to the configuration and the controller selects a new configuration where in the speed and the acceleration of the vehicle is the minimal, respectively the maximal, speed and/or acceleration of the ranges associated to the new configuration.

Advantageously, the safety selection rules imposes switching of the gears to run the internal combustion engine 13 at high speed. More precisely, the controller 37 commands the switching of the gears in order to increase the speed of the vehicle 1 available by the speed range of the configuration. Indeed, the speed of the vehicle 1 is linked to the running of the internal combustion engine 13, the more the speed increases, the more the internal combustion engine 13 runs at high speed. In other terms, the controller 37 commands the switching of the gears as fast as possible, according to the waiting time, so that the running of the internal combustion engine 13 is not limited by the configuration of the gears and the compressor 31 works efficiently and the first and second tank 27 and 29 are filled as fast as possible. Therefore, thanks to the safety selection rules, the controller 37 commands the gearbox 23 according to the normal selection rules without any restriction, as fast as possible.

Advantageously, the safety selection rules impose a maximum switching time when the gears are switched from a configuration to another. The switching time corresponds to the time to switch from a configuration to another once the controller 37 commands the switching. Thus, the maximum switching time corresponds to the maximum time during which pressurized air is provided to the gearbox 23. Thus, the use of the pressurized air is limited for the gearbox 23. Advantageously, the maximum switching time is inferior to 2 seconds and preferably inferior to 1.5 seconds. Advantageously, the maximum switching time depends on the pressure of the air. In other words, the maximum switching time is higher when the pressure is near to the first threshold T1.

Advantageously, the gear selection rules comprise emergency selection rules. The controller 37 commands the gearbox 23 according to the emergency selection rules, when the pressure of the pressurized air system is below a second threshold T2 inferior to the first threshold T1. The emergency selection rules block the gears in a free configuration in which the secondary part 15 is disconnected from the primary part 11. In other terms, the emergency rules prevent the vehicle 1 from moving.

Advantageously, the second threshold T2 is comprised between 4 bar and 6 bar and preferably equal to 5.5 bar.

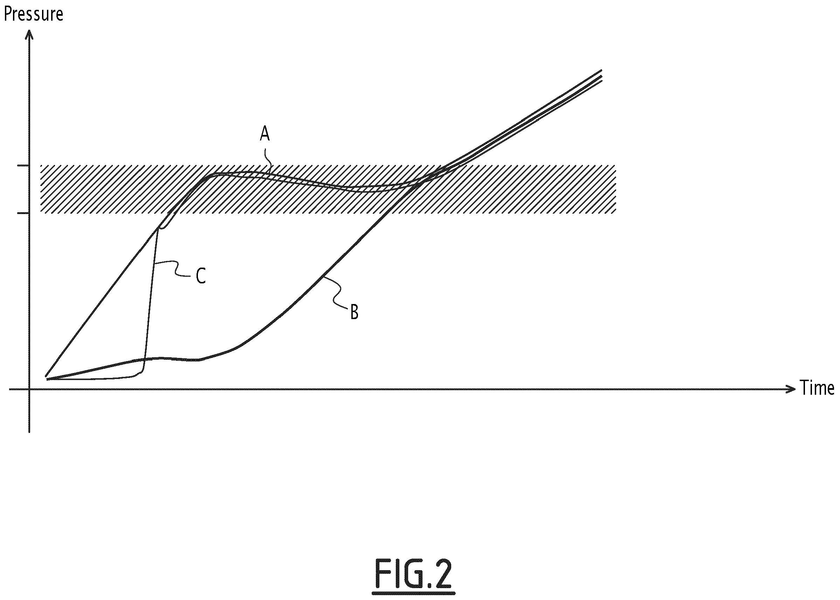

As represented on figure 2, the compressor 31 filled the first tank 27 with pressurized air. As long as the pressure is below the second threshold T2, any pressure is available for the mechanical system 21. According to emergency selection rules, the secondary part 15 is disconnected from the primary part 11 so that the vehicle is blocked in position and there is no danger for a passenger or the driver. Once the pressure is above the second threshold T2, the compressor 31 starts to fill the second tank 29 and fills the first tank 27 to its maximum. Pressurized air is available for the gearbox 23 and the controller 37 commands the gearbox 23 according to the safety selection rules so that there is no lack of pressurized air for the transmission and pressurized air still also available for the braking system 39 so that the safety of the driver is preserved. Once the pressure is above the first threshold T1, the controller 37 commands the gearbox 23 according to the normal selection rules without any restriction.

Thanks to the gear selection rules, the driver can use the vehicle 1 before that the first threshold T1 is reached without danger. Thus, this invention limits the driving performance of the vehicle 1 when the vehicle 1 lacks pressurized air to ensure the safe driving of the vehicle, but without forcing the driver to stop the vehicle to wait the filling by the pressurized air.

In a variant, other systems of the vehicle 1 are provided in pressurized air by the air system 25 and the value of the first and second threshold T1 and T2 are adapted to take in account these systems. The values of the first and second threshold T1 and T2 are also adapted in function of the power of the compressor 31.

In a variant, the values of the first and second threshold T1 and T2 can be expressed in pressurized air capacity.

In a variant, the internal combustion engine is an electrical motor.

**Example 1:** A mechanical transmission system 21 for a powertrain 7 of a vehicle 1, the mechanical transmission system 21 comprising :
- an automated gearbox 23 comprising different gears, the gears being configured to be switched between different configurations, in each configuration a gear associated to the given configuration is configured to connect a primary part 11 of the powertrain to a secondary part 15 of the powertrain 7 with a transmission coefficient associated;
- a pressurized air system 25 adapted to switch the gears from one configuration to another configuration; and
- a controller 37 configured to command the switching of the gears between the different configurations according to gear selection rules, the gear selection rules evolving between normal selection rules when a pressure of the pressurized air system 25 is above a first threshold T1, and safety selection rules when the pressure of the pressurized air system 25 is below the first threshold T1, the safety selection rules imposing a waiting time between two successive switching of the gears.

**Example 2:** The mechanical transmission system 21 of the example 1, wherein the first threshold T1 is comprised between 6 bar and 8 bar and preferably is equal to 7 bar.

**Example 3:** The mechanical transmission system 21 of any one of the previous examples, wherein the gear selection rules also evolve to emergency selection rules, when the pressure of the pressurized air system is below a second threshold T2 inferior to the first threshold T1, the emergency selection rules blocking the gears in a free configuration in which the secondary part 15 is disconnected from the primary part 11.

**Example 4:** The mechanical transmission system 21 of the example 3, wherein the second threshold T2 is comprised between 4 bar and 6 bar and preferably is equal to 5.5 bar.

**Example 5:** The mechanical transmission system 21 of any one of the previous examples, wherein the waiting time is comprised between a lower limit and an upper limit, and the lower limit being 2 seconds or less and the upper limit being 15 seconds or more and preferably the waiting time is equal to 5 seconds.

**Example 6:** The mechanical transmission system 21 of any one of the previous examples, wherein the waiting time depends on the pressure of the pressurized air system 25, the waiting time being shorter when the pressure of the pressurized air system 25 is near to the first threshold T1.

**Example 7:** The mechanical transmission system 21 of any one of the previous examples, wherein each configuration of the gears is available for a speed range and/or an acceleration range of the vehicle 1, the safety selection rules limiting the number of switching by imposing the use of configurations which have distinct speed range and/or an acceleration range.

**Example 8:** The mechanical transmission system 21 of any one of the previous examples, wherein the safety selection rules impose a maximum switching time when the gears are switched from a configuration to another, the maximum switching time corresponding to the maximum time during which pressurized air is provided to the gearbox 23 to switch the configuration of the gears.

**Example 9:** The mechanical transmission system 21 of the example 8, wherein the maximum switching time is inferior to 2 seconds and preferably inferior to 1.5 seconds.

**Example 10:** The mechanical transmission system 21 of any one of the examples 8 or 9, wherein the maximum switching time depends on the pressure of the pressurized air system 25, the maximum switching time being higher when the pressure of the pressurized air system 25 is near to the first threshold T1.

**Example 11:** A powertrain 7 of a vehicle 1 comprising a mechanical transmission system 21 of any one of the previous examples and a braking system 39 connected and activated by the pressurized air system 25 and, when installed in a vehicle, is configured to brake the vehicle 1.

**Example 12:** The powertrain 7 of the example 11, wherein the safety selection rules imposes switching of the gears to run an engine of the powertrain at high speed.

**Example 13:** A vehicle 1 comprising a powertrain 7 of any of the example 11 or 12.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A mechanical transmission system (21) for a powertrain (7) of a vehicle (1), the mechanical transmission system (21) comprising :
- an automated gearbox (23) comprising different gears, the gears being configured to be switched between different configurations, in each configuration a gear associated to the given configuration is configured to connect a primary part (11) of the powertrain to a secondary part (15) of the powertrain (7) with a transmission coefficient associated;
- a pressurized air system (25) adapted to switch the gears from one configuration to another configuration; and
- a controller (37) configured to command the switching of the gears between the different configurations according to gear selection rules, the gear selection rules evolving between normal selection rules when a pressure of the pressurized air system (25) is above a first threshold (T1), and safety selection rules when the pressure of the pressurized air system (25) is below the first threshold (T1), the safety selection rules imposing a waiting time between two successive switching of the gears.

2. The mechanical transmission system (21) according to claim 1, wherein the first threshold (T1) is comprised between 6 bar and 8 bar and preferably is equal to 7 bar.

3. The mechanical transmission system (21) according to any one of the preceding claims, wherein the gear selection rules also evolve to emergency selection rules, when the pressure of the pressurized air system is below a second threshold (T2) inferior to the first threshold (T1), the emergency selection rules blocking the gears in a free configuration in which the secondary part (15) is disconnected from the primary part (11).

4. The mechanical transmission system (21) according to claim 3, wherein the second threshold (T2) is comprised between 4 bar and 6 bar and preferably is equal to 5.5 bar.

5. The mechanical transmission system (21) according to any one of the preceding claims, wherein the waiting time is comprised between a lower limit and an upper limit, and the lower limit being 2 seconds or less and the upper limit being 15 seconds or more and preferably the waiting time is equal to 5 seconds.

6. The mechanical transmission system (21) according to any one of the preceding claims, wherein the waiting time depends on the pressure of the pressurized air system (25), the waiting time being shorter when the pressure of the pressurized air system (25) is near to the first threshold (T1).

7. The mechanical transmission system (21) according to any one of the preceding claims, wherein each configuration of the gears is available for a speed range and/or an acceleration range of the vehicle (1), the safety selection rules limiting the number of switching by imposing the use of configurations which have distinct speed range and/or an acceleration range.

8. The mechanical transmission system (21) according to any one of the preceding claims, wherein the safety selection rules impose a maximum switching time when the gears are switched from a configuration to another, the maximum switching time corresponding to the maximum time during which pressurized air is provided to the gearbox (23) to switch the configuration of the gears.

9. The mechanical transmission system (21) according to claim 8, wherein the maximum switching time is inferior to 2 seconds and preferably inferior to 1.5 seconds.

10. The mechanical transmission system (21) according to any one of claims 8 or 9, wherein the maximum switching time depends on the pressure of the pressurized air system (25), the maximum switching time being higher when the pressure of the pressurized air system (25) is near to the first threshold (T 1).

11. A powertrain (7) of a vehicle (1) comprising a mechanical transmission system (21) according to any one of the previous claims and a braking system (39) connected and activated by the pressurized air system (25) and, when installed in a vehicle, is configured to brake the vehicle (1).

12. The powertrain (7) according to claim 11 wherein the safety selection rules imposes switching of the gears to run an engine (13) of the powertrain (7) at high speed.

13. A vehicle (1) comprising a powertrain (7) according to any one of claims 11 or 12.

## Amended claims

### Amended claims in accordance with Rule 137(2) EPC.

1. A mechanical transmission system (21) for a powertrain (7) of a vehicle (1), the mechanical transmission system (21) comprising :
- an automated gearbox (23) comprising different gears, the gears being configured to be switched between different configurations, in each configuration a gear associated to the given configuration is configured to connect a primary part (11) of the powertrain to a secondary part (15) of the powertrain (7) with a transmission coefficient associated;
- a pressurized air system (25) adapted to switch the gears from one configuration to another configuration; and
- a controller (37)
the mechanical transmission system (21) being **characterized in that** the controller (37) is configured to command the switching of the gears between the different configurations according to gear selection rules, the gear selection rules evolving between normal selection rules when a pressure of the pressurized air system (25) is above a first threshold (T1), and safety selection rules when the pressure of the pressurized air system (25) is below the first threshold (T1), the safety selection rules imposing a waiting time between two successive switching of the gears.

2. The mechanical transmission system (21) according to claim 1, wherein the first threshold (T1) is comprised between 6 bar and 8 bar and preferably is equal to 7 bar.

3. The mechanical transmission system (21) according to any one of the preceding claims, wherein the gear selection rules also evolve to emergency selection rules, when the pressure of the pressurized air system is below a second threshold (T2) inferior to the first threshold (T1), the emergency selection rules blocking the gears in a free configuration in which the secondary part (15) is disconnected from the primary part (11).

4. The mechanical transmission system (21) according to claim 3, wherein the second threshold (T2) is comprised between 4 bar and 6 bar and preferably is equal to 5.5 bar.

5. The mechanical transmission system (21) according to any one of the preceding claims, wherein the waiting time is comprised between a lower limit and an upper limit, and the lower limit being 2 seconds or less and the upper limit being 15 seconds or more and preferably the waiting time is equal to 5 seconds.

6. The mechanical transmission system (21) according to any one of the preceding claims, wherein the waiting time depends on the pressure of the pressurized air system (25), the waiting time being shorter when the pressure of the pressurized air system (25) is near to the first threshold (T1).

7. The mechanical transmission system (21) according to any one of the preceding claims, wherein each configuration of the gears is available for a speed range and/or an acceleration range of the vehicle (1), the safety selection rules limiting the number of switching by imposing the use of configurations which have distinct speed range and/or an acceleration range.

8. The mechanical transmission system (21) according to any one of the preceding claims, wherein the safety selection rules impose a maximum switching time when the gears are switched from a configuration to another, the maximum switching time corresponding to the maximum time during which pressurized air is provided to the gearbox (23) to switch the configuration of the gears.

9. The mechanical transmission system (21) according to claim 8, wherein the maximum switching time is inferior to 2 seconds and preferably inferior to 1.5 seconds.

10. The mechanical transmission system (21) according to any one of claims 8 or 9, wherein the maximum switching time depends on the pressure of the pressurized air system (25), the maximum switching time being higher when the pressure of the pressurized air system (25) is near to the first threshold (T1).

11. A powertrain (7) of a vehicle (1) comprising a mechanical transmission system (21) according to any one of the previous claims and a braking system (39) connected and activated by the pressurized air system (25) and, when installed in a vehicle, is configured to brake the vehicle (1).

12. The powertrain (7) according to claim 11 wherein the safety selection rules imposes switching of the gears to run an engine (13) of the powertrain (7) at high speed.

13. A vehicle (1) comprising a powertrain (7) according to any one of claims 11 or 12.
